## Europäisches Patentamt

## European Patent Office

## Office européen des brevets

(11) Veröffentlichungsnummer: **0 022 252**
**B1**

(12) **EUROPÄISCHE PATENTSCHRIFT**

(45) Veröffentlichungstag der Patentschrift:
**06.04.83**

(51) Int. Cl.³: **C 25 B 13/04**, C 25 B 1/04

(21) Anmeldenummer: **80103788.8**

(22) Anmeldetag: **03.07.80**

(54) **Diaphragma für alkalische Wasserelektrolysen und Verfahren zur Herstellung desselben sowie dessen Verwendung.**

(30) Priorität: **07.07.79 DE 2927566**

(43) Veröffentlichungstag der Anmeldung:
**14.01.81 Patentblatt 81/2**

(45) Bekanntmachung des Hinweises auf die Patenterteilung:
**06.04.83 Patentblatt 83/14**

(84) Benannte Vertragsstaaten:
**FR GB IT**

(56) Entgegenhaltungen:

**DE-A-1 958 385**
**DE-A-2 239 658**
**DE-A-2 737 041**
**DE-C-396 994**
**DE-C-632 494**
**FR-A-2 329 770**
**FR-A-2 357 663**
**FR-A-2 397 471**
**GB-A-2 010 333**
**US-A-3 216 919**

(73) Patentinhaber: **Kernforschungsanlage Jülich
Gesellschaft mit beschränkter Haftung, Postfach 1913,
D-5170 Jülich (DE)**

(72) Erfinder: **Divisek, Jiri, Dr., Gutenbergstrasse 34,
D-5170 Jülich (DE)**
Erfinder: **Mergel, Jürgen, Artilleriestrasse 49,
D-5170 Jülich (DE)**

Diaphragma für alkalische Wasserelektrolysen und
Verfahren zur Herstellung desselben sowie dessen Verwendung

Die Erfindung bezieht sich auf ein Diaphragma für alkalische Wasserelektrolysen aus porösem Sintermetall mit einer Gerüststruktur, das mindestens teilweise zum Metalloxid aufoxidiert ist, sowie auf ein Verfahren zur Herstellung desselben und dessen Verwendung.

Bei der Wahl des Elektrolyten für die technische Wasserelektrolyse spielt die Korrosion der Elektroden und der Zelle eine entscheidende Rolle. Da Säuren trotz der sehr guten elektrischen Leitfähigkeit gerade wegen dieser Korrosionsgefahr nicht in Frage kommen, finden ausschliesslich alkalische Elektrolyte Verwendung. Von diesen wird aufgrund der hohen elektrischen Leitfähigkeit eine ca. 30%ige Kalilauge bevorzugt. In der Praxis wird bei Betriebstemperaturen von etwa 80°C gearbeitet.

Für eine möglichst niedrige und dadurch energiesparende Elektrolyse-Zellspannung wäre eigentlich ein Betrieb bei noch höheren Temperaturen angebracht, die begrenzte Temperaturbeständigkeit des allgemein verwendeten Diaphragmamaterials, Asbest, in heisser Kalilauge stellt jedoch ein erhebliches Hindernis dar. Die relativ schlechte mechanische Stabilität von Asbest ist ein weiterer Nachteil; sie macht grosse Wandstärken von etwa 2 mm für das Asbestdiaphragma erforderlich, woraus ein zu weiteren Energieverlusten führender Spannungsabfall resultiert.

Insbesondere in jüngster Zeit wurden deshalb zahlreiche Versuche unternommen, Asbest als Diaphragmamaterial zu ersetzen. Als bekanntes Beispiel ist das von der Energy Research Corp. entwickelte Diaphragma aus teflon-gebundenem Kaliumhexatitanat $(K_2Ti_6O_{13})$-Filz zu nennen, das bis 150°C beständig ist. Der durch dieses Diaphragma bedingte Spannungsabfall ist allerdings mit dem von Asbestdiaphragmen vergleichbar (siehe auch: M.S. Casper: «Hydrogen Manufacture by Electrolysis, Thermal Decomposition and Unusual Techniques», NOYES DATA CORP., Park Ridge, 1978, S. 190).

Ferner wurde die Verwendung von porösen metallischen Diaphragmen aus gesintertem Nickel vorgeschlagen (P. Perroud und G. Terrier: Hydrogen Energy System, Proc. of the 2nd World Hydrogen Energy Conf., Zürich, 1978, S. 241). Diese porösen Trennmembranen können ausgezeichnete Werte für den elektrischen Widerstand des eingeschlossenen Elektrolyten liefern. Sie sind ausserdem mechanisch sehr stabil und preisgünstig. Der grosse Nachteil besteht allerdings darin, dass diese Diaphragmen ebenso wie die Elektroden elektronenleitend sind und bei kompakter Bauweise eine zu grosse Kurzschlussgefahr besteht.

Von einem kürzlich erwähnten Diaphragma (J. Fischer, H. Hofman, G. Luft, H. Wendt: Extended Abstracts, ISE-Meeting, Budapest 1978, S. 71) sind nur die Widerstands- und Korrosionsdaten bekannt. Die Autoren machen keine Angaben über die Herstellungsart oder Zusammensetzung ihres Diaphragmas. Nach einer Notiz in Bild der Wissenschaft 1979, Heft 7, Seite 5, soll dieses Diaphragma ein Nickelnetz als Träger für poröses, gesintertes Oxidkeramik-Material aufweisen, Vermutlich handelt es sich bei der Oxidkeramik um das oben erwähnte Hexatitanat, das als Diaphragmamaterial bereits in Erwägung gezogen wurde und in nicht näher genannter Weise mit dem Nickelnetz verbunden wird. Die bislang nicht beschriebene Herstellung macht die Nacharbeitung solcher Diaphragmen unmöglich.

Schliesslich ist aus der FR-A1-2 329 770 ein anodischer Separator bekannt, der ausgehend von einer porösen Sintermetallplatte aus Titan, Tantal oder Niob durch frontseitige Beschichtung mit Platinmetall und/oder -oxid und rückseitige Mischoxidbildung mit Oxiden von Si, Al, Mg und/oder Ca erhalten wird. Dieser anodische Separator ist relativ teuer, er hat einen ziemlich komplizierten Aufbau und die grossflächige Herstellung für technische Elektrolysen bietet einige Schwierigkeiten. Ferner darf die für eine ausreichende Stabilität der gesamten Anordnung sorgende Plattendicke bei grösseren Separatoren nicht zu geing sein, so dass der Widerstandsbeitrag eines solchen Separators in Elektrolysezellen unerwünscht hoch ist.

Es ist deshalb Aufgabe der Erfindung, ein Diaphragma für die alkalische Wasserelektrolyse zu schaffen, welches temperatur- und korrosionsbeständig ist, keine eigene Elektronenleitfähigkeit besitzt, genügende mechanische Stabilität hat und aus diesem Grund auch so dünnschichtig gebaut werden kann, dass eine sehr gute elektrische Leitfähigkeit des eingeschlossenen Elektrolyten garantiert werden kann. Darüber hinaus soll es aus billigen Materialien und nach einem einfachen Verfahren herstellbar sein.

Diese Aufgabe wird gemäss der Erfindung durch ein Diaphragma aus Sintermaterial gelöst, das dadurch gekennzeichnet ist, dass das Sintermetall durch Nickel, Eisen oder Kupfer aus einem gerüstgebenden Drahtnetz gebildet wird.

Man erhält ein solches Diaphragma gemäss der Erfindung dadurch, dass ein poröser Metallsinterkörper durch Auftragen einer Nickelpulvermasse auf ein Nickelnetz und anschliessendes Brennen hergestellt und bei erhöhter Temperatur in sauerstoffhaltiger Atmosphäre so weit oxidiert wird, dass ein ausreichend mechanisch stabiler und elektrisch isolierender poröser Körper resultiert.

Weitere vorteilhafte Ausgestaltungen des Verfahrens sind den Ansprüchen 3 und 4 zu entnehmen.

Die Herstellung eines — besonders interessanten — Diaphragmas auf Nickelbasis kann beispielsweise ausgehend von einem Nickelnetz mit einer Maschenweite in der Grössenordnung von 100 bis 500 μm erfolgen, das mit ansteigendem Nickelpulver einer Korngrösse in der Gegend von einigen μm beschichtet wird.

Mit Bindemitteln wie Methylcellulose- oder Kautschuklösung angeteigte Massen werden auf das Netz aufgestrichen. Man kann aber auch einfach mit Alkohol angeteigte Pulvermassen auf das Netz aufsprühen und durch Druck von etwa 200 kp/cm² verdichten. Die Sinterung der Pulvermasse erfolgt in inerter oder reduzierter Atmosphäre, insbesondere in Wasserstoff, bei etwa 700 bis 1000°C für 10 bis 20 Minuten. Auf diese Weise wird ein poröser Körper erhalten, dessen Porosität in der Gegend vonbis zu 90% liegt. Eine zu hohe Brenndauer wäre für die gewünschte hohe Porosität des Sinterkörpers nachteilig.

Der so erhaltene Sinterkörper wird in Luft bei 1000 bis 1200°C bis zu 3 Stunden, insbesonders 10 bis 40 Minuten lang (je nach Diaphragmastärke, die in der Gegend vn 0,3 bis 0,7 mm liegt) gebrannt. Auf diese Weise wird eine ausreichende Oxidation des Körpers erzielt, die mit den gewünschten Eigenschaften vereinbar ist.

Nach dem vorstehend beschriebenen Verfahren können ohne Schwierigkeiten grossflächige Diaphragmen hergestellt werden, deren Eigenschaften der Verwendung in Elektrolysezellen ausgezeichnet angepasst sind. Insbesonders wird durch die nicht zu weit getriebene Oxidation der porösen Sinterkörper ein Produkt erhalten, das ein durch das metallische Restgefüge gegebenes ausreichendes Festigkeitsverhalten zeigt, jedoch durch die über den Gesamtkörper hinweg von der Oberfläche her vordringende Oxidbildung einen ausreichenden elektrischen Widerstand besitzt, der ein problemloses Arbeiten auch in engen Zellen gewährleistet.

Der dem Produkt eigene, durch Oxidation von der Oberfläche her erzielte elektrische Widerstand gestattet insbesondere eine kompakte Bauweise von Elektrolyseeinheiten, bei denen das Diaphragma beidseits sandwichartig mit Elektrodenschichten belegt ist. Die Anbringung dieser am Diaphragma selbst fixierten Elektroden kann in irgendeiner dafür geeigneten Weise erfolgen; insbesondere wird jedoch eine elektrolytische Abscheidung je einer Elektrodenschicht beidseits des Diaphragmas bevorzugt, und speziell wird eine Nickel/Zink-Legierung abgeschieden, die nachfolgend durch Herauslösung von Zink aktiviert wird.

*Beispiel 1*

*Herstellung eines Diaphragmas*

Es wurde zunächst ein poröser Metallsinterkörper hergestellt: Auf ein Nickelnetz (Maschenweite 0,25 mm, Drahtstärke 0,35 mm) wurde eine mit einer Kautschuklösung in Toluol als Bindemittel angeteigte Nickelpulvermasse in einer (Gesamt)-Menge von 50 mg/cm² auf beide Seiten des Netzträgers als Nickelpulverschicht aufgetragen beziehungsweise -gestrichen. Das verwendete INCO-Nickelpulver Typ 255 hatte eine Teilchengrösse von 2,3 bis 3 μm. Nach 15 Minuten Sintern unter Wasserstoff bei 800°C wurde ein 0,5 mm dicker Metallsinterkörper mit 90%iger Porosität erhalten. 80% der Poren waren kleiner als 10 um.

Nach dieser einfachen Methode können beliebig grossflächige Sinterkörper mit Abmessungen hergestellt werden, die nur durch den Ofen begrenzt werden. Der elektrische Widerstand dieser Metallsinterkörper liegt bei einigen mΩ.

Danach wurde der Sinterkörper bei 1200°C in Luft 20 Minuten lang geröstet. Geometrie und Gefüge blieben dabei im wesentlichen erhalten und die mechanische Stabilität war für den Einbau in eine Elektrolysezelle ausreichend. Der elektrische Widerstand war auf 10 MΩ angestiegen.

Mit diesem Metalloxid-Diaphragma wurden Korrosionsuntersuchungen durchgeführt. Die relative Korrosionsabtragung in 40%iger Kalilauge bei 120°C nach 1000 Stunden lag bei 1,9% des Gesamtgewichtes. Auch danach blieb der elektrische Widerstand unverändert im MΩ-Bereich. Der typische spezifische Oberflächenwiderstand in 7n KOH bei 20°C betrug 0,120 Ωcm². Dieser ausgezeichnete Wert wird bei der Arbeitstemperatur (ca. 120°C) natürlich noch geringer.

Das Diaphragma ist auch für alkalische Wasserelektrolysen geeignet, die in der Schmelze stattfinden, wie durch einen entsprechenden Karrosionstest nachgewiesen werden konnte.

Dafür wurde das Diaphragma 500 Stunden lang in eine NaOH : LiOH (1 : 1) Schmelze von 400°C mit 0,5% Feuchtigkeit gataucht. Nach diesem stromlosen Korrosionsversuch wurde keine Gewichtsveränderung festgestellt.

*Beispiel 2*

*Herstellung eines mit Elektroden beschichteten Diaphragmas*

Ein wie in Beispiel 1 hergestelltes Diaphragma wurde auf beiden Seiten galvanisch mit einer Nickel/Zink-Legierung (65% Ni, 35% Zn) beschichtet. Die so erhaltene dreischichtige Einheit aus Diaphragma mit beidseitigen Legierungsschichten wurde seitlich mit zwei Eisengittern elektrisch kontaktiert und durch Herauslösen von Zink in heisser Kalilauge aktiviert.

Auf diese Weise wurde eine kompakte Einheit für die Wasserelektrolyse erhalten, die bei 120°C in 45%iger Kalilauge getestet wurde und folgende Elektrolysedaten lieferte:

| Stromdichte | $100 \frac{mA}{cm^2}$ | $200 \frac{mA}{cm^2}$ | $300 \frac{mA}{cm^2}$ | $400 \frac{mA}{cm^2}$ |
|---|---|---|---|---|
| Zellspannung | 1,44 V | 1,52 V | 1,61 V | 1,67 V |

**Patentansprüche**

1. Diaphragma für alkalische Wasserelektrolyse aus porösem Sintermetall mit einer Gerüststruktur, das mindestens teilweise zum Metalloxid aufoxidiert ist, dadurch gekennzeichnet, dass das Sintermetall durch Nickel, Eisen oder Kupfer auf einem gerüstgebenden Drahtnetz gebildet wird.

2. Verfahren zur Herstellung eines Diaphragmas nach Anspruch 1, dadurch gekennzeichnet, dass ein poröser Metallsinterkörper durch Auftragen einer Nickelpulvermasse auf ein Nickelnetz und anschliessendes Brennen hergestellt und bei erhöhter Temperatur in sauerstoffhaltiger Atmosphäre so weit oxidiert wird, dass ein ausreichend mechanisch stabiler und elektrisch isolierender poröser Körper resultiert.

3. Verfahren nach Anspruch 2, dadurch gekennzeichnet, dass man mit einer Kautschuklösung in Toluol als Bindemittel versehenes Nickelpulver einer Teilchengrösse von etwa 1 bis 10 μm, insbesondere

2 bis 3 µm, in dünner Schicht auf ein Nickelnetz aufträgt und diese Anordnung bei 700 bis 1000°C, 10 bis 20 Minuten lang in inerter oder reduzierender Atmosphäre, insbesondere in Wasserstoff, sintert und den erhaltenen Sinterkörper bis zu 3 Stunden, insbesondere 10 bis 40 Minuten lang, in Luft bei 1000 bis 1200°C röstet.

4. Verfahren nach Anspruch 2 oder 3, dadurch gekennzeichnet, dass man Diaphragmen mit einer Stärke bis etwa 1 mm, insbesondere von 0,3 bis 0,7 mm herstellt.

5. Verwendung des Diaphragmas nach Anspruch 1 für Elektrolysezellen mit am Diaphragma in Sandwichbauweise fixierten aktiven porösen Nickelelektroden.

## Claims

1. Diaphragm for alkaline water electrolysis, consisting of porous sintered metal which has a skeleton structure and is at least partially oxidised to the metal oxide, characterised in that the sintered metal is formed by nickel, iron or copper on a wire netting which provides the structure.

2. Process for the manufacture of a diaphragm according to Claim 1, characterised in that a porous sintered metal body is prepared by applying a nickel powder composition to nickel netting and by subsequent burning, and the oxidation at elevated temperature in a oxygen-containing atmosphere is taken to such a stage that an electrically insulating porous body of adequate mechanical strength results.

3. Process according to Claim 2, characterised in that nickel powder provided with a rubber solution in toluene as a binder and having a particle size of about 1 to 10 µm, in particular 2 to 3 µm, is applied in a thin layer to nickel netting and this arrangement is sintered at 700 to 1,000°C for 10 to 20 minutes in an inert of reducing atmosphere, in particular in hydrogen, and the sintered body obtained is roasted for up to 3 hours, in particular for 10 to 40 minutes, in air at 1,000 to 1,200°C.

4. Process according Claim 2 or 3, characterised in that diaphragms of a thickness of about 1 mm, in particular of 0.3 to 0.7 mm, are prepared.

5. Use of the diaphragm according to Claim 1 for electrolytic cells with active porous nickel electrodes fixed to the diaphragm in sandwich construction.

## Revendications

1. Diaphragme pour l'électrolyse alcaline de l'eau, en métal fritté poreux, ayant une structure squelettique qui est oxydé au moins partiellement en oxyde métallique, caractérisé en ce que le métal fritté est constitué par du nickel, du fer ou du cuivre, sur une grille en fil métallique donnant le squelette.

2. Procédé de fabrication d'un diaphragme suivant la revendication 1, caractérisé en ce qu'il consiste à fabriquer un corps métallique fritté par dépôt d'une masse de poudre de nickel sur une grille de nickel, puis per cuisson, et à oxyder le corps métallique fritté à une température élevée sous atmosphère contenant de l'oxygène jusqu'à obtention d'un corps poreux, suffisamment stable mécaniquement et isolant électriquement.

3. Procédé suivant la revendication 2, caractérisé en ce qu'il consiste à déposer en couche mince sur une grille de nickel la poudre de nickel ayant une dimension de particules de 1 à 10 microns environ, notamment de 2 à 3 microns, et se trouvant dans une solution toluénique de caoutchouc servant de liant, à fritter cet ensemble entre 700 et 1000°C pendant 10 à 20 minutes, sous une atmosphère inerte ou réductrice, notamment sous atmosphère d'hydrogène, et à griller le corps fritté obtenu dans l'air, entre 1000 et 1200°C, pendant jusqu'à 3 heures, notamment pendant 10 à 40 minutes.

4. Procédé suivant la revendication 2 ou 3, caractérisé en ce qu'il consiste à fabriquer des diaphragmes ayant une épaisseur allant jusqu'à 1 mm environ, ayant notamment une épaisseur comprise entre 0,3 et 0,7 mm.

5. Utilisation du diaphragme suivant la revendication 1 pour des cellules d'électrolyse ayant des électrodes en nickel poreux actives fixées au diaphragme suivant un agencement en sandwich.